Europäisches Patentamt

European Patent Office

Office européen des brevets

(19)

(11) **EP 1 198 538 B1**

## (12) FASCICULE DE BREVET EUROPEEN

(45) Date de publication et mention
de la délivrance du brevet:
**27.10.2004 Bulletin 2004/44**

(21) Numéro de dépôt: **00931329.7**

(22) Date de dépôt: **19.05.2000**

(51) Int Cl.⁷: $C10G\ 45/12$, B01J 29/08

(86) Numéro de dépôt international:
**PCT/FR2000/001390**

(87) Numéro de publication internationale:
**WO 2000/071641 (30.11.2000 Gazette 2000/48)**

(54) **CATALYSEUR COMPRENANT UNE ZEOLITHE Y PARTIELLEMENT AMORPHE ET SON UTILISATION EN HYDROCONVERSION DE CHARGES PETROLIERES HYDROCARBONEES**

EIN TEILWEISE AMORFE ZEOLIT Y ENTHALTENDER KATALYSATOR UND SEINE VERWENDUNG FÜR DIE WASSERSTOFFUMSETZUNG VON KOHLENWASSERSTOFFEINSÄTZEN

CATALYST COMPRISING A PARTIALLY AMORPHOUS ZEOLITE Y AND ITS USE IN HYDROCONVERSION OF HYDROCARBON OIL FEEDSTOCKS

(84) Etats contractants désignés:
**BE DE DK NL**

(30) Priorité: **19.05.1999 FR 9906447**
**19.05.1999 FR 9906449**

(43) Date de publication de la demande:
**24.04.2002 Bulletin 2002/17**

(73) Titulaire: **Institut Français du Pétrole**
**92852 Rueil-Malmaison Cedex (FR)**

(72) Inventeurs:
• **BENAZZI, Eric**
**F-78400 Chatou (FR)**
• **DEVES, Jean-Marie**
**F-78540 Vernouillet (FR)**
• **REBOURS, Bernadette**
**F-95120 Ermont (FR)**
• **CHAIGNE, Frédéric**
**F-85230 Beauvoir sur Mer (FR)**
• **CSERI, Tivadar**
**F-92400 Courbevoie (FR)**
• **KASZTELAN, Slavik**
**F-92500 Rueil Malmaison (FR)**

(56) Documents cités:
EP-A- 0 967 010          EP-A- 0 967 012
FR-A- 2 758 278          US-A- 3 867 310
US-A- 3 886 094

Remarques:
Le dossier contient des informations techniques présentées postérieurement au dépôt de la demande et ne figurant pas dans le présent fascicule.

EP 1 198 538 B1

**Description**

La présente invention concerne un catalyseur renfermant au moins une matrice, une zéolithe Y partiellement amorphe, éventuellement au moins un métal hydro-déshydrogénant de préférence choisi dans le groupe formé par les métaux du groupe VIB et du groupe VIII de la classification périodique, éventuellement au moins un élément choisi dans le groupe formé par le phosphore, le bore et le silicium, éventuellement au moins un élément du groupe VIIA, et éventuellement au moins un élément du groupe VIIB. L'invention concerne également l'utilisation de ce catalyseur en hydroconversion, en particulier hydrocraquage des charges hydrocarbonées, et tout particulièrement pour obtenir des huiles de haute viscosité présentant des indices de viscosité (VI) supérieur à 95-100, de préférence compris entre 95-150 et plus particulièrement entre 120-140.
Le catalyseur est également utilisable en hydroraffinage de charges hydrocarbonées.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer d'excellentes bases pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 m$^2$.g$^{-1}$ généralement) présentant une acidité superficielle, telles que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, soit par une association d'au moins un métal du groupe VIB de la classification périodique et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2 h$^{-1}$) mais dotés d'une très bonne sélectivité en distillats moyens. Inversement, une fonction acide forte et une fonction hydrogénante faible donnent des catalyseurs actifs mais présentant de moins bonnes sélectivités en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures dés métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant de la zéolithe Y de type structural FAU, ou les catalyseurs de type bêta présentent quant à eux une activité catalytique supérieure à celles des silice-alumines amorphes, mais présentent des sélectivités en produits légers qui sont plus élevées.

L'hydrotraitement prend une importance de plus en plus grande dans la pratique du raffinage avec la nécessité croissante de réduire la quantité de soufre dans les coupes pétrolières et de convertir des fractions lourdes en fractions plus légères valorisables en tant que carburants. Ceci résulte d'une part de la demande croissante en carburants qui nécessite de convertir des bruts importés de plus en plus riches en fractions lourdes et en hétéroatomes, dont l'azote et le soufre, et d'autre part aux spécifications imposées sur les teneurs en soufre et en aromatiques dans divers pays pour les carburants commerciaux. Cette valorisation implique une réduction relativement importante du poids moléculaire des constituants lourds, qui peut être obtenue par exemple au moyen de réactions de craquage.

Les procédés actuels d'hydroraffinage catalytique utilisent des catalyseurs capables de promouvoir les principales réactions utiles à la mise en valeur des coupes lourdes, en particulier l'hydrogénation des noyaux aromatique (HAR), l'hydrodésulfuration (HDS) l'hydrodéazotation (HDN) et autres hydroéliminations. L'hydroraffinage est employé pour traiter des charges telles que les essences, les gazoles, les gazoles sous vide, les résidus atmosphériques ou sous vide, désasphaltés ou non. Par exemple, il est tout indiqué pour le prétraitement des charges des procédés de craquage et d'hydrocraquage catalytiques. Les composés hétérocycliques azotés rencontrés dans les fractions lourdes se comportent comme des poisons à la toxicité très marquée pour les catalyseurs de craquage ou d'hydrocraquage. En conséquence, la déazotation des charges d'hydrocraquage catalytiques constitue un des moyens possibles pour améliorer le rendement global de ces procédés, et il est alors souhaitable de diminuer au maximum la teneur en azote des charges avant de les craquer. Au moins une étape d'hydroraffinage est habituellement intégrée dans chacun des schémas connus de valorisation des coupes pétrolières lourdes.

Dans l'art antérieur, les zéolithes utilisées pour la préparation des catalyseurs d'hydrocraquage sont caractérisées par plusieurs grandeurs comme leur rapport molaire $SiO_2/Al_2O_3$ de charpente, leur paramètre cristallin, leur répartition poreuse, leur surface spécifique, leur capacité de reprise en ion sodium, ou encore leur capacité d'adsorption de vapeur d'eau. Ainsi dans des brevets précédents du demandeur (brevets français FR-A-2,754,742 ET FR-A-2,754,826) il est utilisé une zéolithe dont le paramètre cristallin est compris entre 24,15 et 24,38Å (1Å = 0,1 nm), le rapport molaire $SiO_2/Al_2O_3$ de charpente compris entre 500 et 21, la teneur en sodium inférieure à 0,15% poids, la capacité de reprise en ion sodium supérieure à 0,85g Na/100g zéolithe, la surface spécifique supérieure à 400m$^2$/g, la capacité d'adsorption de vapeur d'eau supérieure à 6% et de 1 à 20% du volume poreux est contenu dans des pores de diamètre situé entre 20 et 80Å.

Dans le brevet US-A-4,857,170, il est décrit l'utilisation en hydrocraquage d'une zéolithe modifiée de paramètre cristallin inférieur à 24.35Å mais dont le degré de cristallinité n'est pas ou peu affecté par les traitements modificateurs. D'ailleurs, l'art antérieur montre qu'on a toujours recherché à maintenir dans les zéolithes utilisées des fractions cristallines (ou degré de cristallinité) et des taux de pics élevés.

Les brevets US-A-3,929,672, US-A-4,661,239 et US-A-4,663,025 divulguent des catalyseurs comprenant des zéolithes Y désaluminées.

Les travaux de recherche effectués par le demandeur sur de nombreuses zéolithes et solides microporeux l'ont conduit à découvrir que, au contraire et de façon surprenante, un catalyseur contenant au moins une zéolithe Y de type structural FAU partiellement cristallisée, permet d'atteindre des sélectivités en distillat moyen (kérosène et gasoil) nettement améliorées par rapport aux catalyseurs contenant une zéolithe Y connus dans l'art antérieur.

De plus, les mêmes travaux ont permis au demandeur de constater que, de façon surprenante, des échantillons de zéolithe Y différemment modifiés bien que présentant des caractéristiques identiques ou très proches à celles citées dans l'art antérieur peuvent présenter par contre des taux de pic différents et des fractions cristallines différentes, et avoir des réactivités différentes.

Plus précisément, l'invention a pour objet un catalyseur comprenant au moins une matrice et éventuellement au moins un élément choisi dans le groupe formé par les éléments du groupe VIII et du groupe VIB, ledit catalyseur étant caractérisé en ce qu'il contient une zéolithe Y partiellement amorphe.

On entend par zéolithe Y partiellement amorphe, utilisée dans la présente invention, un solide présentant :

-i/ un taux de pic qui est inférieur à 0,40 de préférence inférieur à environ 0,30

-ii/ une fraction cristalline exprimée par rapport à une zéolithe Y de référence sous forme sodique (Na) qui est inférieure à environ 60%, de préférence inférieure à environ 50%,

De préférence, les zéolithes Y partiellement amorphes, solides entrant dans la composition du catalyseur selon l'invention présentent l'une au moins (et de préférence toutes) des autres caractéristiques suivantes :

- iiil un rapport Si/Al global supérieur à 15, de préférence supérieur à 20 et inférieur à 150,
- iv/ un rapport Si/AlIV de charpente supérieur ou égal au rapport Si/Al global,
- v/ un volume poreux au moins égal à 0,20 ml/g de solide dont une fraction, comprise entre 8% et 50%, est constituée de pores ayant un diamètre d'au moins 5 nm (nanomètre) soit 50 Å.
- vi/ une surface spécifique de 210-800 M2/g, de préférence 250-750 M2/g et avantagement 300-600 m$^2$/g

Les taux de pics et les fractions cristallines sont déterminés par diffraction des rayons X, en utilisant une procédure dérivée de la méthode ASTM D3906-97 « Détermination of Relative X-ray Diffraction Intensities of Faujasite-Type-Containing Materials ». On pourra se référer à cette méthode pour les conditions générales d'application de la procédure et, en particulier, pour la préparation des échantillons et des références.

Un diffractogramme est composé des raies caractéristiques de la fraction cristallisée de l'échantillon et d'un fond, provoqué essentiellement par la diffusion de la fraction amorphe ou microcristalline de l'échantillon (un faible signal de diffusion est lié à l'appareillage, air, porte-échantillon, etc.) Le taux de pics d'une zéolithe est le rapport, dans une zone angulaire prédéfinie (typiquement 8 à 40° 2θ lorsqu'on utilise le rayonnement Kα du cuivre, 1 = 0,154 nm), de l'aire des raies de la zéolithe (pics) sur l'aire globale du diffractogramme (pics+fond). Ce rapport pics/(pics+fond) est proportionnel à la quantité de zéolithe cristallisée dans le matériau.

Pour estimer la fraction cristalline d'un échantillon de zéolithe Y, on comparera le taux de pics de l'échantillon à celui d'une référence considérée comme 100% cristallisée (NaY par exemple). Le taux de pics d'une zéolithe NaY parfaitement cristallisée est de l'ordre de 0,55 à 0,60.

Le taux de pics d'une zéolithe USY classique est de 0,45 à 0,55, sa fraction cristalline par rapport à une NaY parfaitement cristallisée est de 80 à 95 %. Le taux de pics du solide faisant l'objet de la présente invention est inférieur à 0,4 et de préférence inférieur à 0,35. Sa fraction cristalline est donc inférieure à 70 %, de préférence inférieure à 60 %.

Les zeolites partiellement amorphes sont préparées selon les techniques généralement utilisées par la désalumination, à partir de zéolites Y disponibles commercialement, c'est-à-dire qui présentent généralement des cristallinités élevées (au moins 80%). Plus généralement on pourra partir de zéolites ayant une fraction cristalline d'au moins 60%, ou d'au moins 70%.

Les zéolithes Y utilisées généralement dans les catalyseurs d'hydrocraquage sont fabriquées par modification de zéolithe Na-Y disponible commercialement. Cette modification permet d'aboutir à des zéolithes dites stabilisées, ultra-stabilisées ou encore désaluminées. Cette modification est réalisée par l'une au moins des techniques de désalumination, et par exemple le traitement hydrothermique, l'attaque acide. De préférence, cette modification est réalisée par combinaison de trois types d'opérations connues de l'homme de l'art : le traitement hydrothermique, l'échange ionique et l'attaque acide. Le traitement hydrothermique est parfaitement défini par la conjonction des variables opératoires que sont la température, la durée, la pression totale et la pression partielle de vapeur d'eau. Ce traitement a pour effet d'extraire de la charpente silico-aluminique de la zéolithe des atomes d'aluminium. La conséquence de ce traitement est une augmentation du rapport molaire $SiO2/Al2O3$ de charpente et une diminution du paramètre de la maille cristalline.

L'échange ionique se déroule généralement par immersion de la zéolithe dans une solution aqueuse contenant des ions susceptibles de se fixer sur les sites d'échange cationique de la zéolithe. On enlève ainsi les cations sodium présent dans la zéolithe après cristallisation.

L'opération d'attaque acide consiste à mettre la zéolithe au contact d'une solution aqueuse d'un acide minéral. La sévérité de l'attaque acide est ajustée par la concentration en acide, la durée et la température. Réalisé sur une zéolithe traitée hydrothermiquement, ce traitement a pour effet d'éliminer les espèces aluminiques extraites de la charpente et qui bouchent la microporosité du solide.

La zéolithe Y partiellement amorphe utilisée dans les catalyseurs selon l'invention est au moins en partie sous forme hydrogène ou acide (H+) ou ammonium (NH4+) ou cationique, ledit cation étant choisi dans le groupe formé par les groupes IA, IB, IIA, IIB, IIIA, IIIB (y compris les terres rares), Sn, Pb et Si, elle est de préférence au moins en partie sous forme H+ ou elle peut aussi être utilisée au moins en partie sous forme cationique (telle que définie ci-dessus).

On emploiera de préférence la zéolithe Y partiellement amorphe au moins en partie sous forme acide (et de préférence en totalité sous forme H) ou partiellement échangée avec des cations, par exemple des cations alcalins et/ou alcalino-terreux.

Le catalyseur qui comprend au moins une zéolithe Y partiellement,amorphe, renferme en outre une fonction hydrogénante. La fonction hydrogénante telle qu'elle a été définie précédemment, comporte de préférence au moins un métal choisi dans le groupe formé par les métaux du groupe VIB et du groupe VIII de la classification périodique des éléments.

Le catalyseur de la présente invention peut renfermer au moins un élément noble ou non noble du groupe VIII tel que fer, cobalt, nickel, ruthénium, rhodium, palladium, osmium, iridium ou platine. Parmi les métaux du groupe VIII on préfère employer les métaux non nobles tels que fer, cobalt, nickel. La catalyseur selon l'invention peut renfermer au moins un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène, nickel-tungstène. Il est également possible d'utiliser des associations de trois métaux par exemple nickel-cobalt-molybdène.

Le catalyseur de la présente invention renferme également au moins une matrice minérale poreuse amorphe ou mal cristallisée de type oxyde. On peut citer à titre d'exemple non limitatif les alumines, les silices, les silice-alumines. On peut choisir également les aluminates. On préfère utiliser des matrices contenant de l'alumine, sous toutes ces formes connues de l'Homme du métier, et de manière encore plus préférée les alumines, par exemple l'alumine gamma.

Dans une mise en oeuvre de l'invention, le catalyseur renferme de préférence au moins un élément choisi dans le groupe formé par le bore, le silicium et le phosphore. Le catalyseur renferme éventuellement au moins un élément du groupe VIIA, de préférence le chlore et le fluor, et encore éventuellement au moins un élément du groupe VIIB.

Le bore, le silicium et/ou le phosphore peuvent être dans la matrice, la zéolithe ou sont de préférence déposés sur le catalyseur et alors principalement localisés sur la matrice.

L'élément introduit, et en particulier le silicium, principalement localisé sur la matrice du support peut être caractérisé par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique.

Le catalyseur de la présente invention renferme généralement en % poids par rapport à la masse totale du catalyseur :

- 0 à 60 % avantageusement 0,1 à 60%, de préférence de 0,1 à 50% et de manière encore plus préférée de 0,1 à 40% d'au moins un métal hydro-déshydrogénant de préférence choisi dans le groupe formé par les métaux du groupe VIB et du groupe VIII,
- 0,1 à 99,9% et de préférence 0,1 à 99,8% ou à 99,7% ou à 99,6 % ou à 99%, de préférence de 1 à 98% d'au moins une matrice minérale poreuse amorphe ou mal cristallisée de type oxyde

ledit catalyseur renferme également de 0,1 à 99,9 %, de préférence de 0,1 à 99,8% ou à 99%, de préférence de 0,1 à 90%, de préférence de 0,1 à 80% de zéolithe Y partiellement amorphe,
ledit catalyseur renfermant éventuellement

- de 0 à 20%, de préférence de 0,1 à 15% et de manière encore plus préférée de 0,1 à 10% d'au moins un élément promoteur choisi dans le groupe formé par le silicium, le bore et le phosphore, et de préférence le bore et /ou le silicium.
- 0 à 20%, de préférence de 0,1 à 15% et de manière encore plus préférée de 0,1 à 10% d'au moins un élément choisi dans le groupe VIIA, de préférence le fluor.
- 0 à 20%, de préférence de 0,1 à 15% et de manière encore plus préférée de 0,1 à 10% d'au moins un élément choisi dans le groupe VIIB.

Les métaux du groupe VIB, du groupe VIII et du groupe VIIB du catalyseur de la présente invention peuvent être présent en totalité ou partiellement sous la forme métallique et/ou oxyde et/ou sulfure.

Ce catalyseur peut être préparé par toutes les méthodes bien connues de l'homme du métier. Avantageusement, il est obtenu par mélange de la matrice et de la zéolithe puis le mélange est mis en forme. L'élément hydrogénant est introduit lors du mélange, ou de manière préférée après mise en forme. La mise en forme est suivie d'une calcination, l'élément hydrogénant est introduit avant ou après cette calcination. La préparation se termine par une calcination à une température de 250 à 600°C. Une des méthodes préférées selon la présente invention consiste à malaxer la poudre de zéolithe Y partiellement amorphe dans un gel humide d'alumine pendant quelques dizaines de minutes, puis à passer la pâte ainsi obtenue à travers une filière pour former des extrudés de diamètre compris entre 0,4 et 4 mm.

La fonction hydrogénante peut être introduite en partie seulement (cas, par exemple, des associations d'oxydes de métaux des groupes VIB et VIII) ou en totalité au moment du malaxage de la zéolithe, c'est à dire la zéolithe Y partiellement amorphe, avec le gel d'oxyde choisi comme matrice.

La fonction hydrogénante peut être introduite par une ou plusieurs opérations d'échange ionique sur le support calciné constitué d'une zéolithe Y partiellement amorphe, dispersée dans la matrice choisie, à l'aide de solutions contenant les sels précurseurs des métaux choisis.

La fonction hydrogénante peut être introduite par une ou plusieurs opérations d'imprégnation du support mis en forme et calciné, par une solution contenant au moins un précurseur d'au moins un oxyde d'au moins un métal choisi dans le groupe formé par les métaux du groupes VIII et les métaux du groupe VIB, le(s) précurseur(s) d'au moins un oxyde d'au moins un métal du groupe VIII étant de préférence introduit(s) après ceux du groupe VIB ou en même temps que ces derniers, si le catalyseurs contient au moins un métal du groupe VIB et au moins un métal du groupe VIII.

Dans le cas où le catalyseur contient au moins un élément du groupe VIB par exemple le molybdène, il est par exemple possible d'imprégner le catalyseur avec une solution contenant au moins un élément du groupe VIB, de sécher, de calciner. L'imprégnation du molybdène peut être facilitée par ajout d'acide phosphorique dans les solutions de paramolybdate d'ammonium, ce qui permet d'introduire aussi le phosphore de façon à promouvoir l'activité catalytique.

Dans un mode de réalisation préféré de l'invention, le catalyseur contient à titre de promoteur au moins un élément choisi parmi le silicium, le bore et le phosphore. Ces éléments sont introduits sur un support contenant déjà au moins une zéolithe Y partiellement amorphe, au moins une matrice, comme définie ci-avant, et au moins un métal choisi dans le groupe formé par les métaux du groupe VIB et les métaux du groupe VIII.

Dans le cas où le catalyseur contient du bore, du silicium et du phosphore et éventuellement l'élément choisi dans le groupe VIIA des ions halogénures et éventuellement au moins un élément choisi dans le groupe VIIB, ces éléments peuvent être introduits dans le catalyseur à divers niveaux de la préparation et de diverses manières.

L'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le P, B, Si et l'élément choisi parmi les ions halogénures du groupe VIIA, peuvent être introduits par une ou plusieurs opérations d'imprégnation avec excès de solution sur le précurseur calciné.

Dans le cas où le catalyseur contient du bore, une méthode préférée selon l'invention consiste à préparer une solution aqueuse d'au moins un sel de bore tel que le biborate d'ammonium ou le pentaborate d'ammonium en milieu alcalin et en présence d'eau oxygénée et à procéder à une imprégnation dite à sec, dans laquelle on remplit le volume des pores du précurseur par la solution contenant le bore.

Dans le cas où le catalyseur contient du silicium, on utilisera une solution d'un composé du silicium de type silicone.

Dans le cas où le catalyseur contient du bore et du silicium, le dépôt de bore et de silicium peut aussi se faire de manière simultanée en utilisant une solution contenant un sel de bore et un composé du silicium de type silicone. Ainsi, par exemple dans le cas où par exemple le précurseur est un catalyseur de type nickel-molybdène supporté sur un support contenant de la zéolithe Y partiellement amorphe et de l'alumine, il est possible d'imprégner ce précurseur par de la solution aqueuse de biborate d'ammonium et de silicone Rhodorsil El P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

Dans le cas où le catalyseur contient au moins un élément du groupe VIIA, de préférence le fluor, il est par exemple possible d'imprégner le catalyseur par une solution de fluorure d'ammonium, de procéder à un séchage par exemple à 80°C, et de procéder à une calcination par exemple et de façon préférée sous air en lit traversé, par exemple à 500°C pendant 4 heures.

D'autres séquences d'imprégnation peuvent être mises en oeuvre pour obtenir le catalyseur de la présente invention.

Dans le cas où le catalyseur contient du phosphore, il est par exemple possible d'imprégner le catalyseur avec une solution contenant du phosphore, de sécher, de calciner.

Dans le cas où les éléments contenus dans le catalyseur, c'est à dire au moins un métal choisi dans le groupe formé par les métaux du groupe VIII et du groupe VIB, éventuellement le bore, le silicium, le phosphore, au moins un élément du groupe VIIA, au moins un élément du groupe VIIB, sont introduits en plusieurs imprégnations des sels précurseurs correspondants, une étape de séchage intermédiaire du catalyseur est généralement effectuée à une température généralement comprise entre 60 et 250°C et une étape de calcination intermédiaire du catalyseur est généralement effectuée à une température comprise entre 250 et 600 °C.

Afin de terminer la préparation du catalyseur, on laisse reposer le solide humide sous une atmosphère humide à une température comprise entre 10 et 80°C, puis on sèche le solide humide obtenu à une température comprise entre 60 et 150°C, et enfin on calcine le solide obtenu à une température comprise entre 150 et 800°C.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle $Si(OEt)_4$, les siloxanes, les polysiloxanes, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

Les sources d'éléments du groupe VIIA -qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium (NH4)2 SiF6, le tétrafluorure de silicium SiF4 ou de sodium Na2SiF6. Le fluor peut être introduit par exemple par imprégnation d'une solution aqueuse d'acide fluorhydrique ou de fluorure d'ammonium.

Les sources d'éléments du groupe VIIB qui peuvent être utilisées sont bien connues de l'homme du métier. On utilise de préférence les sels d'ammonium, les nitrates et les chlorures.

Les catalyseurs ainsi obtenus, sous forme oxydes, peuvent éventuellement être amenés au moins en partie sous forme métallique ou sulfure.

Les catalyseurs obtenus par la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m2/g un volume poreux mesuré par porosimétrie au mercure compris entre 0,2 et 1,5 cm3/g et une distribution en taille de pores pouvant être monomodale, bimodale ou polymodale.

Les catalyseurs ainsi obtenus sont utilisés pour l'hydroconversion de charges hydrocarbonées (au sens large de conversion en présence d'hydrogène) et en particulier pour l'hydrocraquage et l'hydroraffinage. La catalyseur d'hydroconversion contient alors au moins un élément hydro-déshydrogénant.

Les catalyseurs obtenus par la présente invention sont utilisés pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de coupes de type distillats sous vide fortement chargées en soufre et azote. Les produits recherchés sont des distillats moyens et/ou des huiles. Avantageusement, l'hydrocraquage est employé en combinaison avec une étape préalable d'hydrotraitement dans un procédé pour la production améliorée de distillats moyens conjointement à la production de bases huiles ayant un indice de viscosité compris entre 95 et 150.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égale à 230°C et de préférence à 300°C, généralement d'au plus 480°C, et souvent comprise entre 350°C et 450°C. La pression est en général supérieure à 2 MPa et de préférence 3 MPa, elle est inférieure à 12 MPa et de préférence inférieure à 10 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 10h$^{-1}$. Dans ces conditions, les catalyseurs de la présente invention présentent une meilleure activité en conversion, en hydrodésulfuration et en hydrodéazotation que les catalyseurs commerciaux.

Dans un second mode de réalisation, le procédé est effectué en deux étapes, le catalyseur de la présente invention étant employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape peut être tout catalyseur d'hydrotraitement contenu dans l'état de la technique. Ce catalyseur d'hydrotraitement comprend avantageusement une matrice de préférence à base d'alumine et au moins un métal ayant une fonction hydrogénante. La fonction d'hydrotraitement est assurée par au moins un métal ou composé de métal, seul ou en combinaison, choisi parmi les métaux du groupe VIII et du groupe VIB, tels que choisis parmi le nickel, le cobalt, le molybdène et le tungstène notamment. De plus, ce catalyseur peut contenir éventuellement du phosphore et éventuellement du bore.

La première étape se déroule généralement à une température de 350-460°C, de préférence 360-450°C, une pression totale d'au moins 2 MPa; et de préférence 3 MPa, une vitesse volumique horaire de 0,1-5h$^{-1}$ et de préférence 0.2-2h$^{-1}$ et avec une quantité d'hydrogène d'au moins 100Nl/Nl de charge, et de préférence 260-3000Nl/Nl de charge.

Pour l'étape de conversion avec le catalyseur selon l'invention (ou seconde étape), les températures sont en général supérieures ou égales à 230°C et souvent comprises entre 300°C et 480°C, de préférence entre 330° C et 450° C. La pression est en général d'au moins 2 MPa et de préférence 3 MPa, elle est inférieure à 12 MPa et de préférence inférieure à 10 MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la plage de pression modérée.

Dans un autre mode de réalisation en deux étapes, le catalyseur de la présente invention peut être employé pour l'hydrocraquage dans des conditions de pression d'hydrogène élevées d'au moins 5 MPa. Les coupes traitées sont par exemple de type distillats sous vide fortement chargée en soufre et azote qui ont été préalablement hydrotraitées. Dans ce mode d'hydrocraquage le niveau de conversion est supérieur à 55%. Dans ce cas, le procédé de conversion de coupe pétrolière se déroule en deux étapes, le catalyseur selon l'invention étant utilisé dans la deuxième étape.

Le catalyseur de la première étape peut être tout catalyseur d'hydrotraitement contenu dans l'état de la technique. Ce catalyseur d'hydrotraitement comprend avantageusement une matrice de préférence à base d'alumine et au moins un métal ayant une fonction hydrogénante. La fonction d'hydrotraitement est assurée par au moins un métal ou composé de métal, seul ou en combinaison, choisi parmi les métaux du groupe VIII et du groupe VIB, tels que choisis parmi le nickel, le cobalt, le molybdène et le tungstène notamment. De plus, ce catalyseur peut contenir éventuellement du phosphore et éventuellement du bore.

La première étape se déroule généralement à une température de 350-460°C, de préférence 360-450°C, une pression supérieure à 3MPa, une vitesse volumique horaire de 0.1-5h$^{-1}$ et de préférence 0.2-2h$^{-1}$ et avec une quantité d'hydrogène d'au moins 100Nl/Nl de charge, et de préférence 260-3000Nl/Nl de charge.

Pour l'étape de conversion avec le catalyseur selon l'invention (ou seconde étape), les températures sont en général supérieures ou égales à 230°C et souvent comprises entre 300°C et 480°C et de préférence entre 300° C et 440° C. La pression est en général supérieure à 5 MPa et de préférence supérieure à 7 MPa. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$.

Dans ces conditions, les catalyseurs de la présente invention présentent une meilleure activité en conversion et une meilleure sélectivité en distillats moyens que les catalyseurs commerciaux, même pour des teneurs en zéolithe considérablement plus faibles que celles des catalyseurs commerciaux.

Dans un procédé de production d'huiles utilisant avantageusement le procédé d'hydrocraquage selon l'invention, il est opéré selon l'enseignement du brevet US-5,525,209 avec une première étape d'hydrotraitement dans de conditions permettant d'atteindre un effluent ayant un indice de viscosité de 90-130 et une teneur réduite en azote et en composés polyaromatiques. Dans une étape suivante d'hydrocraquage, l'effluent est traité selon l'invention et de façon à ajuster la valeur de l'indice de viscosité à celle souhaitée par l'exploitant.

Les catalyseurs obtenus par la présente invention sont aussi utilisés pour l'hydroraffinage de charges hydrocarbonées telles que les coupes pétrolières, les coupes issues du charbon ou les hydrocarbures produits à partir du gaz naturel. Les réactions principales mises en jeu sont l'hydrogénation des aromatiques, l'hydrodéazotation, l'hydrodéoxygénation, l'hydrodésulfuration, l'hydrodémétallisation, accompagnées le plus souvent d'un hydrocraquage. Les charges hydrocarbonées contiennent des composés aromatiques, et/ou oléfiniques, et/ou naphténiques, et/ou paraffiniques, et éventuellement des métaux, et/ou de l'azote, et/ou de l'oxygène et/ou du soufre. Dans ces utilisations, les catalyseurs obtenus par la présente invention présentent une activité améliorée par rapport à l'art antérieur.

Les charges employées dans le procédé sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et au moins un métal. Les coupes lourdes, telles que et à titre d'exemples non exhaustif, les distillats sous vide, les résidus désasphaltés ou hydrotraités ou équivalents, sont de préférence constituées d'au moins 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote.
La teneur en azote est usuellement comprise entre 1 et 5000 ppm poids et la teneur en soufre entre 0,01 et 5% poids.

Les catalyseurs de la présente invention sont aussi avantageusement utilisés de préférence lors du prétraitement des charges de craquage catalytique et en première étape d'un hydrocraquage Ou d'une hydroconversion douce. lis sont alors usuellement employés en association avec un catalyseur acide, zéolithique ou non zéolithique pour la deuxième étape du traitement.

Les conditions de l'hydroraffinage telles que température, pression, taux de recyclage d'hydrogène, vitesse volumique horaire, Pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,05 MPa et souvent supérieure à 1 MPa. Le taux de recyclage d'hydrogène est au minimum de 80 et souvent compris entre 50 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuation permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer le mélange de solides sous flux d'un mélange d'hydrogène et d'hydrogène sulfuré ou sous flux d'un mélange d'azote et d'hydrogène sulfuré à une température comprise entre 150 et 800°C, de préférence entre 250 et 600°C, généralement dans une zone réactionnelle à lit traversé.

Les résultats qui importent au raffineur sont l'activité en HDS, en HDN et en conversion. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que l'activité peut être augmentée par une élévation de température, mais c'est souvent au détriment de la stabilité du catalyseur. La stabilité ou durée de vie s'améliore avec une augmentation de la pression ou du taux de recyclage d'hydrogène, mais ceci se fait au détriment de l'économie du procédé.

Les exemples suivants illustrent la présente invention sans toutefois en limiter la portée.

Exemple 1: Préparation d'un support de catalyseur d'hydrocraquage ou hydroraffinage contenant une zéolithe Y partiellement amorphe

Une zéolithe désaluminée ultrastable commerciale USY de rapport molaire Si/Al global égal à 15,2, de rapport Si/Al de charpente 29, de paramètre cristallin égal à 24,29Å, contenant 0.03% poids de Na, ayant un taux de pics de 0,48 et présentant une fraction cristalline de 85%, est amorphisée par un traitement hydrothermique à 620°C pendant 5h en présence d'une pression partielle de vapeur d'eau égale à 0,5 bars absolus. La zéolithe est ensuite soumise à une attaque acide réalisée dans les conditions suivantes : normalité de l'acide 0.85N, durée de 3h et température égale à 95°C. Un dernier traitement hydrothermique identique au premier avec une pression partielle de vapeur d'eau égale à 0.02bars est appliqué à la zéolithe. A l'issue de ces traitements la zéolithe partiellement amorphe a un taux de pics de 0,26, une fraction cristalline de 44%, un rapport Si/Al global de 72, et un rapport Si/Al$^{IV}$ de charpente de 80, un volume poreux de 0,35ml d'azote liquide par gramme dont 29% sont constitués de pores dont les diamètres sont au moins égaux à 5 nanomètre (50 Å). Un support de catalyseur d'hydrocraquage contenant cette zéolithe Y est fabriqué de la façon suivante :

On mélange 60 g de la zéolithe Y partiellement amorphe décrite ci-dessus, à 40 g d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120°C sous air puis calcinés à 550°C sous air.

Exemple 2 : Préparation de catalyseurs d'hydrocraquage et d'hydroraffinage, contenant une zéolithe Y partiellement amorphe, conformes à l'invention

Les extrudés de support contenant une zéolithe Y partiellement amorphe de l'exemple 1 sont imprégnés à sec par une solution aqueuse d'heptamolybdate d'ammonium, séchés une nuit à 120°C sous air et enfin calcinés sous air à 550°C. Les teneurs pondérales en oxydes du catalyseur $Y_1Mo$ obtenus sont indiquées dans le tableau 1.
Le catalyseur $Y_1Mo$ a ensuite été imprégné par une solution aqueuse renfermant du biborate d'ammonium pour obtenir un dépôt d'environ 1,7 % masse de $B_2O_3$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé $Y_1MoB$. De la même manière, on a ensuite préparé un catalyseur $Y_1MoSi$ par imprégnation du catalyseur $Y_1Mo$ par une émulsion de silicone Rhodorsil EP1 (Rhone-Poulenc) de manière à déposer environ 2,0% de $SiO_2$. Les extrudés imprégnés sont ensuite séchés pendant une nuit à 120°C puis calcinés à 550°C pendant 2 heures sous air sec. Enfin, un catalyseur $Y_1MoBSi$ a été obtenu imprégnation du catalyseur $Y_1Mo$ par une solution aqueuse renfermant le biborate d'ammonium et l'émulsion de silicone Rhodorsil EP1 (Rhone-Poulenc). Les extrudés imprégnés sont alors séchés pendant une nuit à 120°C puis calcinés à 550°C pendant 2 heures sous air sec.
Les extrudés de support, contenant une zéolithe Y partiellement amorphe, préparés dans l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur $Y_1NiMo$ obtenus sont indiquées dans le tableau 1.

Les extrudés sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur $Y_1NiMoP$ obtenus sont indiquées dans le tableau 1.

Nous avons ensuite imprégné l'échantillon de catalyseur $Y_1NiMoP$ par une solution aqueuse renfermant du biborate d'ammonium. Après maturation à température ambiante dans une atmosphère saturée en eau les extrudés imprégnés sont séchés pendant une nuit à 120°C puis calcinés à 550°C pendant 2 heures sous air sec. On obtient un catalyseur nommé $Y_1NiMoPB$.

Un catalyseur $Y_1NiMoPSi$ a été obtenu par la même procédure que le catalyseur $Y_1NiMoPB$ ci-dessus mais en remplaçant dans la solution d'imprégnation le précurseur de bore par l'émulsion de silicone Rhodorsil EP1.

Enfin, un catalyseur $Y_1NiMoPBSi$ a été obtenu par la même procédure que les catalyseurs ci-dessus mais en utilisant une solution aqueuse renfermant le biborate d'ammonium et l'émulsion de silicone Rhodorsil EP1. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur $Y_1NiMoPSSiF$. Les teneurs finales en oxydes des catalyseurs $Y_1NiMo$ sont indi-quées dans le tableau 1.

Tableau 1 : Caractéristiques des catalyseurs Y₁Mo et Y₁NiMo

| Catalyseur | Y₁Mo | Y₁MoB | Y₁MoSi | Y₁MoBSi |
|---|---|---|---|---|
| Mo03 (% pds) | 14,3 | 14,5 | 14,2 | 14,1 |
| 13203 (% pds) | 0 | 1,5 | 0 | 1,6 |
| SiO2 (% pds) | 50,7 | 49,7 | 52,3 | 51,4 |
| Complément à 100% composé majoritairement de Al₂O₃ (%pds) | 35,0 | 34,3 | 33,5 | 32,9 |

Tableau 1 suite

| Catalyseur | Y₁ NiMo | Y₁ NiMoP | Y₁ NiMoPB | Y₁ NiMoPSi | Y₁ NiMoPBSi | Y₁ NiMoPBSiF |
|---|---|---|---|---|---|---|
| MoO₃ (% pds) | 13,5 | 13,9 | 12,8 | 12,9 | 12,9 | 12,85 |
| NiO (% pds) | 3,05 | 2,2 | 2,95 | 2,9 | 3,0 | 2,95 |
| P₂O₅ (% pds) | 0 | 4,4 | 4,3 | 4,5 | 4,5 | 4,4 |
| B₂O₃ (% pds) | 0 | 0 | 1,4 | 0 | 1,5 | 1,6 |
| SiO₂ (% pds) | 49,4 | 47,0 | 46,5 | 48,6 | 47,9 | 47,3 |
| F (% pds) | 0 | 0 | 0 | 0 | 0 | 1,0 |
| Complément à 100% composé majoritairement de Al₂O₃ (% pds) | 34,05 | 32,5 | 32,05 | 31,1 | 30,2 | 29,9 |

Le catalyseur Y₁NiMoP a ensuite été imprégné par une solution aqueuse renfermant du nitrate de manganèse. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé Y₁NiMoPMn. On imprègne ensuite ce catalyseur par une solution aqueuse renfermant le biborate d'ammonium et l'émulsion de silicone Rhodorsil EP1(Rhone-Poulenc). Les extrudés imprégnés sont alors séchés pendant une nuit à 120°C puis calcinés à 550°C pendant 2 heures sous air sec et on obtient le catalyseur Y₁NiMoPMnBSi. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur Y₁NiMoPMnBSiF. Les teneurs pondérales de ces catalyseurs sont indiquées dans le tableau 2.

Tableau 2 :

| Caractéristiques des catalyseurs $Y_1$NiMo contenant du manganèse | | | |
|---|---|---|---|
| Catalyseur | $Y_1$ NiMoPMn | $Y_1$ NiMoPMnESi | $Y_1$ NiMoPMnESiF |
| $MoO_3$ (% pds) | 12,6 | 12,1 | 12,2 |
| NiO (% pds) | 3,1 | 2,9 | 2,8 |
| $MnO_2$ (% pds) | 2,1 | 2,1 | 2,2 |
| $P_2O_5$ (% pds) | 4,4 | 4,5 | 4,9 |
| $B_2O_3$ (% pds) | 0 | 1,2 | 1,4 |
| $SiO_2$ (% pds) | 46,0 | 47,1 | 46,4 |
| F (%pds) | 0 | 0 | 1,0 |
| Complément à 100% composé majoritairement de $Al_2O_3$ (% pds) | 31,8 | 30,1 | 29,1 |

L'analyse, par microsonde électronique, des cataiyseurs $Y_1$NiMoPSi, $Y_1$,NiMoPBSi, $Y_1$NiMoPBSiF (tableau 1) et des catalyseurs $Y_1$NiMoPMnBSi, $Y_1$NiMoPMnBSiF (tableau 2) montre que le silicium ajouté au catalyseur selon l'invention est principalement localisé sur la matrice et se trouve sous forme de silice amorphe.

Exemple 3 : Préparation d'un support contenant une zéolithe $Y_1$ et une silice-alumine

Nous avons fabriqué une poudre de silice-alumine par co-précipitation ayant une composition de 2% $SiO_2$ et 98% $Al_2O_3$. Un support de catalyseur d'hydrocraquage contenant cette silice-alumine et la zéolithe Y partiellement amorphe de l'exemple 1 a été ensuite fabriqué. Pour cela on utilise 50 % poids de la zéolithe Y partiellement amorphe de l'exemple 1 que l'on mélange à 50 % poids d'une matrice composée de la silice alumine préparée ci-dessus. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air.

Exemple 4: Préparation de catalyseurs d'hydrocraquage contenant une zéolithe Y partiellement amorphe et une silice-alumine

Les extrudés de support contenant une silice-alumine et une zéolithe Y partiellement amorphe de l'exemple 3 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur $Y_1$-SiAl-NiMoP obtenus sont indiquées dans le tableau 3.

Nous avons imprégné l'échantillon de catalyseur $Y_1$-SiAl-NiMoP par une solution aqueuse renfermant du biborate d'ammonium de manière a imprégner 1,5% masse de $B_2O_3$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé $Y_1$-SiAl-NiMoPB qui contient donc du silicium dans la matrice silice-alumine.

Les caractéristiques des catalyseurs $Y_1$-SiAl-NiMo sont résumées dans le tableau 3.

Tableau 3 :

| Caractéristiques des catalyseurs $Y_1$-SiAl-NiMo | | |
|---|---|---|
| Catalyseur | $Y_1$-SiAl-NiMoP | $Y_1$-SiAl-NiMoPB |
| MoO3 (% pds) | 13,1 | 13,5 |
| NiO (% pds) | 2,9 | 2,7 |
| $P_2O_5$ (% pds) | 4,7 | 4,9 |

Tableau 3 :   (suite)

| Caractéristiques des catalyseurs $Y_1$-SiAl-NiMo | | |
|---|---|---|
| Catalyseur | $Y_1$-SiAl-NiMoP | $Y_1$-SiAl-NiMoPB |
| $B_2O_3$(% pds) | 0 | 1,4 |
| $SiO_2$ (% pds) | 47,6 | 46,5 |
| Complément à 100% composé majoritairement de $Al_2O_3$ (%pds) | 31,7 | 31,0 |

Exemple **5**: Préparation d'un support contenant une zéolithe de l'art antérieur

Un support de catalyseur d'hydrocraquage contenant une zéolithe Y a été fabriqué en grande quantité de façon à pouvoir préparer différents catalyseurs à base du même support. Pour cela on utilise 20,5 % poids de la même zéolithe commerciale USY que celle qui est utilisée dans l'exemple 1 - Cette zéolithe est mélangée à 79,5 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air. On obtient ainsi des extrudés cylindriques de 1,2 mm de diamètre, ayant une surface spécifique de 223 $m^2$/g et une distribution en taille de pore monomodale centrée sur 10 nm.

Exemple 6 : Préparation de catalyseurs d'hydrocraquage contenant la zéolithe Y de l'exemple 5

Les extrudés de support contenant une zéolithe Y désaluminée -de l'exemple 5 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur YNiMoP obtenus sont indiquées dans le tableau 4. Le catalyseur YNiMoP final contient en particulier 16,3 % poids de zéolithe Y de paramètre de maille 2,429 nm de rapport SiO2/$Al_2O_3$ global de 30,4 et de rapport $SiO_2$/$Al_2O_3$ de charpente de 58.
Nous avons imprégné l'échantillon de catalyseur YNiMoP par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur NiMoP/alumine-Y dopée au bore.
Un catalyseur YNiMoPSi a été obtenu par la même procédure que le catalyseur YNiMoPB ci-dessus mais en remplaçant dans la solution d'imprégnation le précurseur de bore par l'émulsion de silicone Rhodorsil EP1 (Rhone-Poulenc). Enfin, un catalyseur YNiMoPBSi a été obtenu imprégnation du catalyseur par une solution aqueuse renfermant le biborate d'ammonium et l'émulsion de silicone Rhodorsil EP1 (Rhône-Poulenc). Les autres étapes de la procédure sont les mêmes que celles indiquées ci dessus: Les caractéristiques des catalyseurs YNiMo sont résumées dans le tableau 4.

Tableau 4 :

| Caractéristiques des catalyseurs YNiMo (non conformes à l'invention) | | | | | |
|---|---|---|---|---|---|
| Catalyseur | YNiMo | YNiMoP | YNiMoPB | YNiMoPSi | YNiMoPESi |
| $MoO_3$ (% pds) | 13,5 | 12,9 | 12,7 | 12,7 | 12,5 |
| NiO (% pds) | 3,1 | 3,0 | 2,9 | 2,9 | 2,8 |
| $P_2O_5$ (% pds) | 0 | 4,4 | 4,3 | 4,3 | 4,2 |
| $B_2O_3$ (% pds) | 0 | 0 | 1,8 | 0 | 1,8 |
| $SiO_2$ (% pds) | 16,2 | 15,4 | 15,2 | 17,0 | 16,7 |
| Complément à 100% composé majoritairement de $Al_2O_3$ (% pds) | 67,2 | 64,3 | 63,1 | 63,1 | 62,0 |

L'analyse, par microsonde électronique, des catalyseurs YNiMoPSi, YNimopBsi (tableau 4) montre que le silicium ajouté au catalyseur selon l'invention est principalement localisé sur la matrice et se trouve sous forme de silice amorphe.

Exemple 7 : Comparaison des catalyseurs en hydrocraquage d'un gazole sous vide à conversion partielle.

Les catalyseurs dont les préparations sont décrites dans les exemples précédents sont utilisés dans les conditions de l'hydrocraquage à pression modérée sur une charge pétrolière dont les principales csracténstiques sont les suivantes :

| | |
|---|---|
| Densité (20/4) | 0,921 |
| Soufre (% poids) | 2,46 |
| Azote (ppm poids) | 1130 |
| Distillation simulée | |
| point initial | 365°C |
| point 10% | 430°C |
| point 50% | 472°C |
| point 90 % | 504°C |
| point final | 539°C |
| point d'écoulement | + 39°C |

L'unité de test catalytique comprend deux réacteurs en lit fixe, à circulation ascendante de la charge ("up-flow). Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un catalyseur d'hydrocraquage décris ci-dessus. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 cm$^3$ |
| Catalyseur d'hydrocraquage | 40 cm$^3$ |
| Température | 400°C |
| Débit d'hydrogène | 20 l/h |
| Débit de charge | 40 cm$^3$/h |

Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée.

Les performances catalytiques sont exprimées par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion en hydrodésulfuration HDS est prise égale à :

$$HDS = (S_{initial} - S_{effluent}) / S_{initial} * 100 = (24600 - S_{effluent}) / 24600 * 100$$

La conversion en hydrodéazotation HDN est prise égale à :

$$HDN = (N_{initial} - N_{effluent}) / N_{initial} * 100 = (1130 - N_{effluent}) / 1130 * 100$$

Dans le tableau suivant, nous avons reporté la conversion en hydrodésulfuration HDS et la conversion en hydrodéazotation HDN pour les catalyseurs.

Tableau 5 :

| Activités catalytiques des catalyseurs en hydrocraquage partiel à 400°C | | | |
|---|---|---|---|
| Références | Composition | HDS (%) | HDN (%) |
| YNIMoP | NiMoP/Y - Al$_2$O$_3$ | 99,43 | 96.6 |
| YNiMoPB | NiMoPB/Y | 99,57 | 97,4 |
| YNiMoPSi | NiMoPSi/Y | 99,85 | 98.3 |
| Y$_1$-SiAl-NiMoP | NiMoP/ Y$_1$-SiAl | 98,6 | 96.6 |
| Y$_1$-SiAl-NiMoPE | NiMoPB/ Y$_1$-SiAl | 98,7 | 97,8 |
| Y$_1$NiMo | NiMo/ Y$_1$-Al$_2$O$_3$ | 98.6 | 95,1 |
| Y$_1$NiMoP | NiMoP/ Y$_1$ | 99,3 | 97,0 |
| Y$_1$NiMoPB | NiMoPB/ Y$_1$ | 99,7 | 97,8 |
| Y$_1$NiMoPSi | NiMoPSi/ Y$_1$ | 99,8 | 98,7 |
| Y$_1$NiMoPBSi | NiMoPBSi/ Y$_1$ | 99,8 | 99,0 |

Les résultats du tableau 5 montrent que l'utilisation d'un catalyseur selon l'invention, contenant une zéolithe Y partiellement amorphe, est plus actif en hydrodésulfuration et en hydrodéazotation que les catalyseurs de l'art antérieur et que d'autre part l'ajout d'au moins un élément choisi dans le groupe formé par le B, Si et P apporte une amélioration des performances du catalyseur selon l'invention.

De plus, les résultats du tableau 5 montrent qu'il est avantageux d'introduire le silicium sur le catalyseur déjà préparé (série Y$_1$NiMo) plutôt que sous la forme d'un support contenant du silicium obtenu à partir d'une silice-alumine (série Y$_1$-SiAlNiMo). Il est donc particulièrement avantageux d'introduire le silicium sur un précurseur contenant déjà les éléments du groupe VIB et/ou VIII et éventuellement au moins l'un des éléments P, B et F.

Exemple 8 : Comparaison des catalyseurs en hydrocraquage d'un gazole sous vide à haute conversion

Les catalyseurs dont les préparations sont décrites aux exemples précédents sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |
| Azote (ppm poids) | 10 |
| Distillation simulée | |
| point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VIB et un élément du groupe VIII déposés sur alumine.

On ajoute à la charge hydrotraitée un composé soufré précurseur de H$_2$S et un composé azoté précurseur de NH$_3$ afin de simuler les pressions partielles d'H$_2$S et d'NH$_3$ présente dans la deuxième étape d'hydrocraquage. La charge ainsi préparée est injectée dans l'unité de test d'hydrocraquage qui comprend un réacteur en lit fixe; à circulation ascendante de la charge ("up-flow"), dans lequel est introduit 80 ml de catalyseur. Avant injection de la charge, le catalyseur est sulfuré par un mélange n-hexane/DMDS + aniline jusqu'à 320 °C. Notons que toute méthode de sulfuration in-situ ou ex-situ est convenable. Une fois la sulfuration réalisée, la charge décrite ci-dessus peut être transformée. Les conditions opératoires de l'unité de test sont les suivantes :

| Pression totale | 9 MPa |
|---|---|
| Catalyseur | 80 cm$^3$ |
| Température | 360-420°C |
| Débit d'hydrogène | 80 l/h |
| Débit de charge | 80 cm$^3$/h |

Les performances catalytiques sont exprimées par la température qui permet d'atteindre un niveau de conversion brute de 70 % et par la sélectivité brute en distillats moyen 150-380°C. Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{\text{moins}} \text{ de l'effluent}$$

La sélectivité brute SB en distillat moyen est prise égale à :

$$SB = 100*\text{poids de la fraction } (150°C\text{-}380°C)/\text{poids de la fraction } 380°C^{\text{moins}} \text{ de}$$

$$\text{l'effluent}$$

Les distillats moyens obtenus sont composés de produits ayant un point d'ébullition compris entre 150 et 380°C.

La température de réaction est fixée de façon à atteindre une conversion brute CB égale à 70% poids. Dans le tableau 6 suivant, nous avons reporté la température de réaction et la sélectivité brute pour les catalyseurs décrits dans les tableaux 1 et 2, ainsi que les valeurs des indices de viscosité déterminées sur les fractions 380°C+ après déparaffinage au solvant.

Le tableau 6 met en évidence que l'utilisation d'un catalyseur selon l'invention contenant de la zéolithe Y partiellement amorphe conduit à des sélectivités brutes en distillat moyen plus élevées que celles des catalyseurs de l'art antérieur non conformes. D'autre part, l'ajout d'au moins un élément choisi dans le groupe formé par P, B et Si aux catalyseurs selon l'invention conduit aussi à une augmentation de l'activité. On constate également l'amélioration apportée par la présence du manganèse ou du fluor sur l'activité.

En outre, il apparait clairement que les indices de viscosité des fractions 380°C+ obtenues avec les catalyseurs selon l'invention sont nettement améliorés.

D'une manière générale, l'ajout au catalyseur selon l'invention d'au moins un élément choisi dans le groupe P, B, Si, VIIB, VIIA au catalyseur contenant la zéolithe Y partiellement amorphe et l'élément du groupe VIB permet d'améliorer l'activité en conversion, ce qui se traduit par une diminution de la température de réaction nécessaire pour atteindre 70% de conversion.

Tableau 6 :

| Activités catalytiques des catalyseurs en hydrocraquage haute conversion (70%) | | | | |
|---|---|---|---|---|
| Référence | Composition | T (°C) | Sélectivité brute en distillat moyen (150-380°C) (% pds) | Indice de viscosité VI 380°C+ déparaffinage |
| YNiMo | NiMo/Y - Al$_2$O$_3$ | 375 | 65,8 | 112 |
| YNiMo P | NiMoP/Y - Al$_2$O$_3$ | 374 | 66,4 | 115 |
| YNiMo PB | NiMoPB/Y - Al$_2$O$_3$ | 374 | 67,1 | 116 |
| YNiMo PSi | NiMoPSi/Y - Al$_2$O$_3$ | 374 | 68,0 | |
| Y$_1$MoB | MoB/Y$_1$ - Al$_2$O$_3$ | 386 | 69,4 | |

Tableau 6 :   (suite)

| Activités catalytiques des catalyseurs en hydrocraquage haute conversion (70%) | | | | |
|---|---|---|---|---|
| Référence | Composition | T (°C) | Sélectivité brute en distillat moyen (150-380°C) (% pds) | Indice de viscosité VI 380°C+ déparaffinage |
| $Y_1MoSi$ | $MoSi/Y_1 - Al_2O_3$ | 385 | 69,6 | |
| $Y_1MoBSi$ | $MoBSi/Y_1 - Al_2O_3$ | 384 | 70,1 | |
| $Y_1NiMo$ | $NiMo/Y_1 - Al_2O_3$ | 387 | 70,3 | 123 |
| $Y_1NiMoP$ | $NiMoP/Y_1 - Al_2O_3$ | 384 | 71,1 | 124 |
| $Y_1NiMoPB$ | $NiMoPB/Y_1 - Al_2O_3$ | 384 | 71,8 | 120 |
| $Y_1NiMoPSi$ | $NiMoPSi/Y_1 - Al_2O_3$ | 382 | 72,5 | |
| $Y_1NiMoPBSi$ | $NiMoPBSi/Y_1 - Al_2O_3$ | 380 | 72,6 | |
| $Y_1NiMoPBSiF$ | $NiMoPBSiF/Y_1 - Al_2O_3$ | 376 | 72,3 | |
| $Y_1NiMoPMn$ | $NiMoPMn/Y_1 - Al_2O_3$ | 382 | 72,0 | |
| $Y_1NiMoPMnBSi$ | $NiMoPMnBSi/Y_1 - Al_2O_3$ | 380 | 71,9 | |
| $Y_1NiMoPMnBSi F$ | $NiMoPMnBSiF/Y_1 - Al_2O_3$ | 377 | 71,7 | |

Exemple 9 : Test en hydrotraitement d'un distillat sous vide

Les catalyseurs $Y_1NiMo$, $Y_1NiMoP$, $Y_1NiMoPB$, $Y_1NiMoPBSi$ et $Y_1NiMoPBSiF$, dont les préparations ont été précédemment décrites, ont été comparés en test d'hydrotraitement d'un distillat sous vide dont les principales caractéristiques sont données dans le tableau suivant :

| | |
|---|---|
| Densité à 15°C | 0.938 |
| Soufre | 3,12%poids |
| Azote total | 1050 ppm poids |
| Distillation Simulée | |
| PI | 345 °C |
| 10% | 412 °C |
| 50% | 488 °C |
| 90% | 564 °C |
| PF | 615 °C |

Le test est mené dans un réacteur pilote isotherme à lit fixe traversé, les fluides circulant de bas en haut. Après sulfuration in situ à 350°C dans l'unité sous pression au moyen d'un gazole de distillation directe auquel est additionné 2% poids de diméthyldisulfure, le test d'hydrotraitement a été conduit dans les conditions opératoires suivantes :

| | |
|---|---|
| Pression totale | 12 Mpa |
| Volume de catalyseur | 40 $cm^3$ |
| Température | 380°C |
| Débit d'hydrogène | 24 l/h |
| Débit de charge | 20 $cm^3$/h |

Les performances catalytiques des catalyseurs testés sont données dans le tableau 7 suivant. Elles sont exprimées en activité relative, en posant que celle du catalyseur $Y_1NiMo$ est égale à 1 et en considérant qu'elles sont d'ordre 1,5. La relation liant l'activité et la conversion en hydrodésulfuration (%HDS) est la suivante :

$$\text{A}_{HDS} = \left[ \frac{100}{(100 - \%HDS)} \right]^{0,5} - 1$$

La même relation est applicable pour l'hydrodéazotation (% HDN et $A_{HDN}$).

La conversion nette de la fraction de la charge ayant un point d'ébullition supérieur à 380°C (% 380°C$^+$ en poids) obtenue avec chaque catalyseur est aussi évaluée. Elle est exprimée à partir des résultats de distillation simulée (méthode ASTM D86) par la relation :

$$\text{Conv } 380°\text{C}^- = \frac{(\%380°\text{ C-})recette - (\%380°\text{C-})charge}{(\%380°\text{ C+})charge}$$

Tableau 7 :

| Activité des catalyseurs en hydrotraitement de distillat sous vide | | | |
|---|---|---|---|
| Catalyseur | $A_{HDS}$ relative à $Y_1$NiMo | $A_{HDN}$ relative à $Y_1$NiMo | Conv. Nette 380°C$^-$ (% poids) |
| $Y_1$NiMo | 1 | 1 | 53,4 |
| $Y_1$NiMoP | 1,07 | 1,2 | 55,2 |
| $Y_1$NiMoPB | 1,15 | 1,4 | 57,8 |
| $Y_1$NiMoPBSi | 1,3 | 1,7 | 59,5 |
| $Y_1$NiMoPBSiF | 1,25 | 1,65 | 62,8 |

Ces exemples montrent tout l'intérêt d'utiliser un catalyseur selon l'invention qui permet d'atteindre des activités en hydrodésulfuration, hydrodéazotation ainsi qu'une conversion nette en produits 380°C$^-$ (produits ayant un point d'ébullition inférieur à 380°C) plus élevée que les catalyseurs connus de l'art antérieur.

Le catalyseur selon l'invention présente donc une activité en hydrogénation des hydrocarbures aromatiques et en hydrodéazotation et en hydrodésulfuration importante. Sans vouloir être lié par une quelconque théorie, il semble que cette activité particulièrement élevée des catalyseurs de la présente invention est due à la présence de la zéolite amorphisée. Elle est renforcée par la présence conjointe du bore et du silicium sur la matrice ce qui induit d'une part une amélioration des propriétés hydrogénante, hydrodésulfurante, hydrodéazotante et d'autre part une amélioration de la conversion.

**Revendications**

1.    Catalyseur comprenant au moins une matrice et au moins une zéolithe Y partiellement amorphe présentant un taux de pic inférieur à 0,35, ce qui correspond à une fraction cristalline inférieure à 60 %, exprimée par rapport à une zéolithe de référence sous forme sodique (Na) considérée comme 100 % cristallisée, le taux de plc et la fraction crlstalline étant déterminés à partir d'un diffractogramme aux rayons X selon la méthode ASTM-D-3906-97, catalyseur dans lequel ladite zéolithe Y partiellement amorphe est obtenue par désalumination.

2.    Catalyseur selon la revendication 1 comprenant en outre au moins un élément hydro-déshydrogénant.

3.    Catalyseur selon l'une des revendications précédentes dans lequel la zéolithe présente également l'une au moins des caractéristiques suivantes :

-    un rapport Si/Al global supérieur à 15,
-    un rapport Si/Al$^{IV}$ de charpente supérieur ou égal au rapport Si/Al global,
-    un volume poreux au moins égal à 0,20 ml/g de solide dont une fraction, comprise entre 8% et 50%, est constituée de pores ayant un diamètre d'au moins 5 nm.
-    une surface spécifique de 210-800 m$^2$/g.

4.    Catalyseur selon la revendication 2 dans lequel l'élément hydro-déshydrogénant est choisi parmi les éléments du groupe VIII et les éléments du groupe VI B.

**5.** Catalyseur selon l'une des revendications précédentes renfermant en outre au moins un élément choisi dans le groupe formé par le phosphore, le bore, le silicium.

**6.** Catalyseur selon la revendication 5 dans lequel l'élément est déposé sur le catalyseur et principalement localisé sur la matrice.

**7.** Catalyseur selon l'une des revendications précédentes renfermant en outre au moins un élément du groupe VII A.

**8.** Catalyseur selon l'une des revendications précédentes renfermant en outre au moins un élément du groupe VII B.

**9.** Catalyseur selon la revendication 8 dans lequel l'élément du groupe VII B est le manganèse.

**10.** Catalyseur selon l'une des revendications précédentes renfermant en % pds par rapport à la masse totale du catalyseur :

- 0,1 à 99,9% d'au moins une matrice minérale poreuse amorphe ou mal cristallisée de type oxyde,
- 0,1 à 99,9 % de zéolithe Y partiellement amorphe
- 0 à 60 % d'au moins un élément hydro-déshydrogénant
- 0 à 20 % d'au moins un élément choisi dans le groupe formé par le bore, le silicium, le phosphore;
- 0 à 20 % d'au moins un élément du groupe VII A
- 0 à 20 % d'au moins un élément du groupe VII B.

**11.** Catalyseur selon l'une des revendications précédentes dans lequel la matrice est choisie parmi l'alumine, la silice-alumine, les aluminates, la silice.

**12.** Catalyseur selon l'une des revendications précédentes, dans lequel la zéolite Y partiellement amorphe est préparée à partir d'une zéolithe Y présentant une fraction cristalline déterminée par diffraction X par rapport à ladite zéolithe de référence d'au moins 60%.

**13.** Catalyseur selon la revendication 12 dans lequel les techniques de désalumination utilisées en combinaison sont le traitement hydrothermique, l'échange ionique et l'attaque acide.

**14.** Procédé d'hydroconversion de charge hydrocarbonée avec un catalyseur selon l'une des revendications précédentes et comprenant également au moins un élément hydrodeshydrogénant.

**15.** Procédé selon la revendication 14 qui est un hydrocraquage.

**16.** Procédé selon la revendication 14 d'hydrocraquage à une température supérieure à 200°C, une pression supérieure à 0,1MPa, une vitesse spatiale de 0,1-20h-1 et un recyclage d'hydrogène d'au moins 50Nl/l de charge.

**17.** Procédé selon la revendication 15 dans lequel la pression est supérieure à supérieure à 2 MPa et inférieure à 12 MPa, la température d'au moins 230°C, la vitesse spatiale de 0,1-10h-1 et le recyclage d'hydrogène d'au moins 100Nl/l de charge, la conversion étant inférieure à 55%.

**18.** Procédé selon la revendication 15 dans lequel le pression est d'au moins 5 MPa et la conversion supérieure à 55 %.

**19.** Procédé selon l'une des revendications 15 à 18 dans lequel le catalyseur est préalablement sulfuré.

**20.** Procédé selon l'une des revendications 15 à 19 dans lequel la charge est soumise à un hydrotraitement avant d'être hydrocraquée.

**21.** Procédé salon la revendication 14 qui est un hydroraffinage.

**22.** Procédé selon la revendication 21 opérant à une température supérieure à 200°C, une pression supérieure à 0,05MPa, un taux de recyclage d'hydrogène d'au moins 80Nl/l de charge et une vitesse volumique horaire de 0,1-20h-1.

**23.** Procédé selon la revendication 22 dans lequel le catalyseur est préalablement sulfuré.

**Patentansprüche**

1. Katalysator, der wenigstens eine Matrix und wenigstens einen teilweise amorphen Y-Zeolith, der eine Peakquote unter 0,35 aufweist, was einer kristallinen Fraktion unter 60%, ausgedrückt im Verhältnis zu einem Referenzzeolith in Natriumform (Na) entspricht, der als 100% kristallisiert betrachtet wird, wobei die Peakquote und die kristalline Fraktion ausgehend von einem Röntgendiffraktogramm gemäß der ASTM-D-3906-97-Methode bestimmt sind, in welchem Katalysator der teilweise amorphe Y-Zeolith durch Desaluminierung erhalten wird.

2. Katalysator nach Anspruch 1, der im übrigen wenigstens ein hydrierendesdehydrierendes Element umfasst.

3. Katalysator nach einem der vorhergehenden Ansprüche, in dem der Zeolith auch wenigstens eines der folgenden Merkmale aufweist:

   - ein Si/Al-Gesamtverhältnis über 15,

   - ein Si/Al$^{IV}$-Verhältnis des Gitters über oder gleich dem Si/Al-Gesamtverhältnis,

   - ein Porenvolumen wenigstens gleich 0,20 ml/g an Feststoff, wovon eine Fraktion, die zwischen 8 und 50% liegt, aus Poren besteht, die einen Durchmesser von weniger als 5 nm haben,

   - eine spezifische Oberfläche von 210-800 m$^2$/g.

4. Katalysator nach Anspruch 2, in dem das hydrierende-dehydrierende Element unter den Elementen der Gruppe VIII und den Elementen der Gruppe VIB gewählt ist.

5. Katalysator nach einem der vorhergehenden Ansprüche, der im übrigen wenigstens ein Element einschließt, das aus der Gruppe gewählt ist, die gebildet wird durch Phosphor, Bor, Silizium.

6. Katalysator nach Anspruch 5, in dem das Element auf den Katalysator abgeschieden wird und hauptsächlich auf der Matrix lokalisiert ist.

7. Katalysator nach einem der vorhergehenden Ansprüche, der im übrigen wenigstens ein Element der Gruppe VIIA einschließt.

8. Katalysator nach einem der vorhergehenden Ansprüche, der im übrigen wenigstens ein Element der Gruppe VIIB einschließt.

9. Katalysator nach Anspruch 8, in dem das Element der Gruppe VIIB Mangan ist.

10. Katalysator nach einem der vorhergehenden Ansprüche, der in Gew.-% im Verhältnis zur Gesamtmasse des Katalysators einschließt:

    - 0,1 bis 99,9% wenigstens einer amorphen oder schlecht kristallisierten, porösen, mineralischen Matrix vom Oxidtyp,

    - 0,1 bis 99,9% eines teilweise amorphen Y-Zeoliths,

    - 0 bis 60% wenigstens eines hydrierenden-dehydrierenden Elements,

    - 0 bis 20% wenigstens eines Elements, das aus der Gruppe gewählt ist, die gebildet wird durch Bor, Silizium, Phosphor;

    - 0 bis 20% wenigstens eines Elements der Gruppe VIIA,

    - 0 bis 20% wenigstens eines Elements der Gruppe VIIB.

**EP 1 198 538 B1**

**11.** Katalysator nach einem der vorhergehenden Ansprüche, in dem die Matrix gewählt ist unter Aluminiumoxid, Silizium-Aluminiumoxid, den Aluminaten, Kieselerde.

**12.** Katalysator nach einem der vorhergehenden Ansprüche, in dem der teilweise amorphe Y-Zeolith aus einem Y-Zeolith hergestellt ist, der eine durch Röntgendiffraktion bestimmte kristalline Fraktion im Verhältnis zum Referenzzeolith von wenigstens 60% aufweist.

**13.** Katalysator nach Anspruch 12, in dem die in Kombination verwendeten Desaluminierungstechniken die Hydrothermische Behandlung, der Ionenaustausch und der Säureangriff sind.

**14.** Verfahren zur Hydrierumwandlung einer Kohlenwasserstoffbeschickung mit einem Katalysator gemäß einem der Ansprüche 2 bis 13.

**15.** Verfahren nach Anspruch 14, das ein Hydrocracken ist.

**16.** Verfahren nach Anspruch 14 zum Hydrocracken bei einer Temperatur über 200°C, einem Druck über 0,1 MPa, einer Raumgeschwindigkeit von 0,1 - 20 h⁻¹ und einer Wasserstoffrezyklierung von wenigstens 50NI/I Beschickung.

**17.** Verfahren nach Anspruch 15, bei dem der Druck größer als 2 MPa und kleiner als 12 MPa, die Temperatur wenigstens 230°C, die Raumgeschwindigkeit 0,1 - 10 h⁻¹ und die Wasserstoffrezyklierung wenigstens 100 NI/I Beschickung ist, wobei die Umwandlung kleiner als 55% ist.

**18.** Verfahren nach Anspruch 15, bei dem der Druck wenigstens 5 MPa und die Umwandlung größer als 55% ist.

**19.** Verfahren nach einem der Ansprüche 15 bis 18, bei dem der Katalysator vorgeschwefelt wird.

**20.** Verfahren nach einem der Ansprüche 15 bis 19, bei dem die Beschickung einem Hydrotreatment unterzogen wird, bevor sie hydrierend gecrackt wird.

**21.** Verfahren nach Anspruch 14, das ein Hydroraffinieren ist.

**22.** Verfahren nach Anspruch 21, das bei einer Temperatur über 200°C, einem Druck über 0,05 MPa, einer Wasserstoffrezyklierungsquote von wenigstens 800NI/I Beschickung und einer stündlichen Volumengeschwindigkeit von 0,1 - 20 h⁻¹ arbeitet.

**23.** Verfahren nach Anspruch 22, bei dem der Katalysator vorgeschwefelt wird.

**Claims**

**1.** Catalyst comprising at least one matrix and at least one partially amorphous Y zeolite having a peak rate that is less than 0.35, corresponding to a crystalline fraction of less than 60% expressed relative to a reference zeolite in sodium form (Na) considered as 100% crystallized, peak rate and crystalline fraction being determined from x-ray diffraction spectrum according to method ASTM-D-3906-97, catalyst wherein said partially amorphous Y zeolite is obtained by dealumination.

**2.** Catalyst according to claim 1 that also comprises at least one hydro-dehydrogenating element.

**3.** Catalyst according to one of the preceding claims in which the zeolite also has at least one of the following characteristics:

-- an overall Si/Al ratio that is greater than 15,
-- an Si/Al$^{iv}$ framework ratio that is greater than or equal to the overall Si/Al ratio,
-- a pore volume that is at least equal to 0.20 ml/g of solid whose fraction, between 8% and 50%, consists of pores that have a diameter of at least 5 nm,
-- a specific surface area of 210-800 m²/g.

**4.** Catalyst according to claim 2, in which the hydro-dehydrogenating element is selected from among the elements

**21**

of group VIII and the elements of group VI B.

5. Catalyst according to one of the preceding claims that also contains at least one element that is selected from the group that is formed by phosphorus, boron, and silicon.

6. Catalyst according to claim 5, in which the element is deposited on the catalyst and mainly located on the matrix.

7. Catalyst according to one of the preceding claims that also contains at least one element of group VII A.

8. Catalyst according to one of the preceding claims that also contains at least one element of group VII B.

9. Catalyst according to the claim in which the element of group VII B is manganese.

10. Catalyst according to one of the preceding claims that contain in % by weight relative to the total mass of the catalyst:

    -- 0.1 to 99.9% of at least one oxide-type amorphous or poorly crystallized porous mineral matrix,
    -- 0.1 to 99.9% of partially amorphous Y zeolite,
    -- 0 to 60% of at least one hydro-dehydrogenating element,
    -- 0 to 20% of at least one element that is selected from the group that is formed by boron, silicon and phosphorus,
    -- 0 to 20% of at least one element of group VII A,
    -- 0 to 20% of at least one element of group VII B.

11. Catalyst according to one of the preceding claims, in which the matrix is selected from among alumina, silica-alumina, aluminates and silica.

12. Catalyst according to one of the preceding claims, in which the partially amorphous Y zeolite is obtained from on a Y zeolite having a crystalline fraction determined by x-ray of at least 60% regard to said reference zeolite.

13. Catalyst according to claim 12, in which the dealumination techniques that are used in combination are the hydrothermic treatment, ion exchange and acid attack.

14. Process for hydroconversion of hydrocarbon feedstock with a catalyst according to one of claims 2 to 13

15. Process according to claim 14 that is a hydrocracking.

16. Process according to claim 15 for hydrocracking at a temperature that is higher than 200°C, a pressure that is higher than 0.1 MPa, a volumetric flow rate of 0.1-20 h-1 and a hydrogen recycling of at least 50 Nl/l of feedstock.

17. Process according to claim 15, in which the pressure is higher than 2 MPa and less than 12 MPa, the temperature is at least 230°C, the volumetric flow rate is 0.1-10 h-1 and the hydrogen recycling is at least 100 Nl/l of feedstock, whereby the conversion is less than 55%.

18. Process according to claim 15, in which the pressure is at least 5 MPa, and the conversion is greater than 55%.

19. Process according to one of claims 15 to 18 in which the catalyst is previously sulfurized.

20. Process according to one of claims 15 to 18, in which the feedstock is subjected to a hydrotreatment before being hydrocracked.

21. Process according to claim 14, which is a hydrorefining.

22. Process according to claim 21 that operates at a temperature that is higher than 200°C, a pressure that is higher than 0.05 MPa, a hydrogen recycling rate of at least 80 Nl/l of feedstock and an hourly volumetric flow rate of 0.1-20 h$^{-1}$.

23. Process according to claim 22 in which the catalyst is previously sulfurized.